(19) Europäisches Patentamt
European Patent Office
Office européen des brevets

(11) **EP 4 171 128 A1**

(12) **EUROPEAN PATENT APPLICATION**
published in accordance with Art. 153(4) EPC

(43) Date of publication:
**26.04.2023 Bulletin 2023/17**

(21) Application number: **21825055.3**

(22) Date of filing: **23.03.2021**

(51) International Patent Classification (IPC):
***H04W 36/24*** *(2009.01)*

(52) Cooperative Patent Classification (CPC):
**H04W 36/00; H04W 36/08; H04W 36/24**

(86) International application number:
**PCT/CN2021/082398**

(87) International publication number:
**WO 2021/253905 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2020 CN 202010568847**

(71) Applicant: **ZTE Corporation
Shenzhen, Guangdong 518057 (CN)**

(72) Inventor: **CHEN, Yang
Shenzhen, Guangdong 518057 (CN)**

(74) Representative: **Regimbeau
20, rue de Chazelles
75847 Paris Cedex 17 (FR)**

(54) **CELL RESELECTION METHOD, NETWORK MANAGEMENT DEVICE, BASE STATION, AND STORAGE MEDIUM**

(57) Provided are a cell reselection method, a network management device, a base station, and a storage medium. The cell reselection method includes the following: acquiring a plurality of historical minimization drive test, MDT, data of a serving cell in which a target user equipment is located; performing clustering processing on the plurality of historical MDT data to obtain a plurality of target MDT data sets; and reselecting a serving cell of the target user equipment according to the plurality of target MDT data sets.

**FIG. 1**

**Description**

TECHNICAL FIELD

The present application relates to the field of wireless communications, for example, a cell reselection method, a network management device, a base station, and a storage medium.

BACKGROUND

Mobility load balancing (MLB), as an important technology in the self-organizing network (SON), can solve a load imbalance problem among multiple base stations, optimize cell reselection, hand over parameters, and adjust a cell traffic load. The load balancing method first screens user equipments (UEs) and cells which are not suitable for balancing, for example, test devices and cells with relatively high loads are screened first, then the screened UEs and cells are sorted, and finally matching and handover are performed on the sorted LTEs and cells. This load balancing method cannot guarantee the network quality of the UEs after the handover and may cause a situation where a load of a cell after the handover is low while the cell has poor coverage or no coverage, such that a weak coverage may occur in the cell after the handover, affecting the use of user equipments corresponding to the cell.

SUMMARY

The present application provides a cell reselection method, a network management device, a base station, and a storage medium.

A cell reselection method is provided and includes the following steps.

A plurality of historical minimization drive test (MDT) data of a serving cell in which a target user equipment is located are acquired; clustering processing is performed on the plurality of historical MDT data to obtain multiple target MDT data sets; and a serving cell of the target user equipment is reselected according to the plurality of target MDT data sets.

A cell reselection method is further provided and includes the following steps.

A plurality of target MDT data sets sent by a network management device are acquired, where the plurality of target MDT data sets are obtained by the network management device performing clustering on a plurality of historical MDT data of a serving cell in which a target user equipment is located; and current MDT data reported by the target user equipment is acquired, and a serving cell of the target user equipment is reselected based on the plurality of target MDT data sets and the current MDT data.

A network management device is further provided. The network management device includes a processor, a memory, a computer program stored in the memory and executable by the processor, and a data bus configured to enable connection communication between the processor and the memory, where the computer program, when executed by the processor, performs the first one of the cell reselection methods described above.

A base station is further provided. The base station includes a processor, a memory, a computer program stored in the memory and executable by the processor, and a data bus configured to enable connection communication between the processor and the memory, where the computer program, when executed by the processor, performs the second one of the cell reselection methods described above.

A storage medium is further provided and is configured for computer-readable storage, where the storage medium stores one or more programs, and the one or more programs are executable by one or more processors to perform the cell reselection methods described above.

BRIEF DESCRIPTION OF DRAWINGS

FIG. 1 is a flowchart of a cell reselection method according to an embodiment of the present application;

FIG. 2 is a sub-step flowchart of the cell reselection method in FIG. 1;

FIG. 3 is a schematic diagram of a scenario of a cell reselection method according to an embodiment of the present application;

FIG. 4 is a flowchart of another cell reselection method according to an embodiment of the present application;

FIG. 5 is a sub-step flowchart of the cell reselection method in FIG. 4;

FIG. 6 is a structure diagram of a network management device according to an embodiment of the present application; and

FIG. 7 is a structure diagram of a base station according to an embodiment of the present application.

DETAILED DESCRIPTION

The technical solutions in embodiments of the present application will be described below in conjunction with drawings in the embodiments of the present application.

The flowcharts shown in drawings are illustrative and do not have to include all of the content and the operations/steps nor must they be executed in the order shown. For example, some operations/steps can also be decomposed, combined or partially merged, so the actual order of execution may change according to the actual situation.

Terms used herein are used to describe specific embodiments and are not intended to limit the present application. As used herein, the singular forms "a", "an", and "the" are intended to include the plural forms, unless otherwise clearly indicated in the context, unless the context clearly indicates otherwise.

The embodiments of the present application provide a cell reselection method, a network management device, a base station, and a storage medium. The cell reselection method can be applied to a network management device or a base station. The network management device is a device required for network management, and the configuration of the network management device should meet all requirements of the network management. The network management device includes network management units of multiple nodes, as well as a device of a network management center and corresponding software, and the network management device can plan, control and monitor a network in an industrial environment to ensure normal operation of the network. In some examples, the network management device may include a hardware portion embedded in a network management protocol, such as a router, a switch and the like, and a software portion, such as a network management system (NMS), network management software and the like.

Some embodiments of the present application will be described below in conjunction with the drawings.

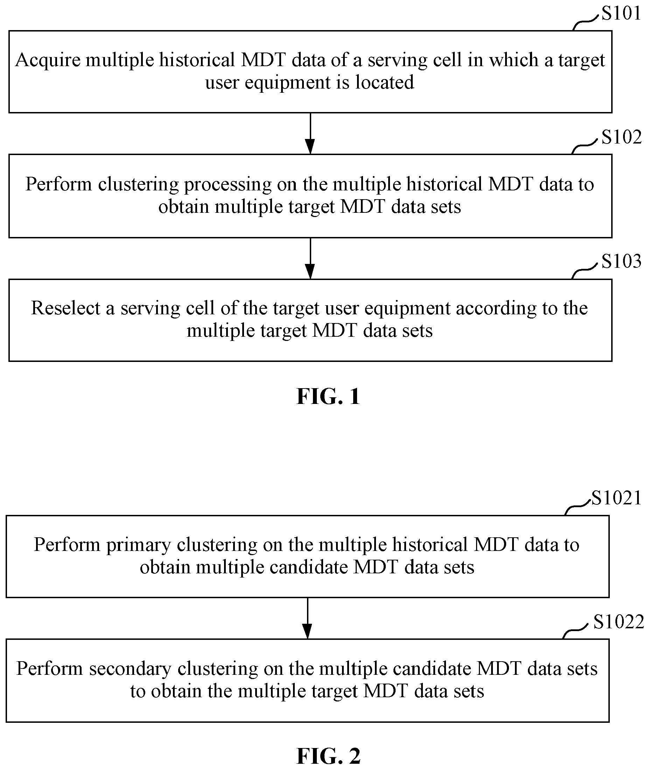

With reference to FIG. 1, FIG. 1 is a flowchart of a cell reselection method according to an embodiment of the present application.

As shown in FIG. 1, the cell reselection method includes steps S101 to S103.

In step S101, a plurality of historical MDT data of a serving cell in which a target user equipment is located are acquired.

For example, when a user equipment moves from the coverage of the current cell to the coverage of another cell, cell handover requires to be performed on the user equipment to ensure that communication of the user equipment is not interrupted. For another example, when a load of user equipments accessing a cell is relatively large, cell handover requires to be performed on some user equipments accessing the cell, so as to improve an overall capacity of the network. Before the cell handover is performed on a user equipment, the serving cell of the user equipment requires to be reselected, that is, a target cell of the to-be-handed-over user equipment requires to be determined before the cell handover is performed on the user equipment.

In an embodiment, a network management device sends an MDT data acquisition request to a base station at a preset time interval to acquire MDT data of user equipments in multiple cells of the base station and stores the acquired MDT data in a cloud. When the network management device receives a cell reselection request (or a cell handover request) of the target user equipment, the network management device determines the current serving cell of the target user equipment and calls historical MDT data of multiple user equipments of the current serving cell stored in the cloud to acquire multiple historical MDT data of the serving cell in which the target user equipment is located.

In an embodiment, the base station sends a cell reselection request (or a cell handover request) of the target user equipment to the network management device. When receiving the cell reselection request (or the cell handover request) of the target user equipment sent from the base station, the network management device collects MDT data of multiple user equipments of the serving cell in which the target user equipment is located from the base station until the volume of the collected MDT data of user equipments reaches a preset volume to obtain the multiple historical MDT data of the serving cell in which the target user equipment is located. The target user equipment is a user equipment to be reselected (or a user equipment to be handed over).

In an embodiment, when the base station determines that the serving cell of the target user equipment requires to be handed over, the base station sends a target MDT data set acquisition request of the serving cell to the network management device. The network management device acquires MDT data of multiple user equipments of the serving cell from the base station based on the received target MDT data set acquisition request of the serving cell to obtain multiple historical MDT data of the serving cell in which the target user equipment is located; clustering processing is performed on the multiple historical MDT data through the network management device to obtain multiple target MDT data sets of the serving cell; and the network management device sends the multiple clustered target MDT data sets of the serving cell back to the base station for the base station to execute a cell reselection operation for the target user equipment based on the multiple target MDT data sets.

In step S102, clustering processing is performed on the multiple historical MDT data to obtain multiple target MDT data sets.

After acquiring the multiple historical MDT data, the network management device performs the clustering processing on the multiple historical MDT data to obtain multiple target MDT data sets. The embodiments of the present application do not limit the related clustering methods of the clustering processing. Optionally, the clustering method includes partitioning methods, hierarchical methods, density-based methods, grid-based methods, model-based methods and the like. In some embodiments, the clustering algorithm includes a K-means clustering algorithm, an expectation maximum (EM) clustering algorithm of a Gaussian mixture model (GMM), a graph community detection clustering algorithm and the like.

In an embodiment, as shown in FIG. 2, step S102 includes sub-steps S 1021 to S 1022.

In sub-step S 1021, primary clustering is performed on the multiple historical MDT data to obtain multiple candidate MDT data sets.

In an embodiment, the multiple historical MDT data are grouped according to an intra-frequency neighbor cell identifier in each historical MDT datum to obtain multiple MDT data sets, and a clustering operation is performed on MDT data in each MDT data set to obtain the multiple candidate MDT data sets. The intra-frequency neighbor cell identifier is an identifier of an intra-frequency neighbor cell of the serving cell. The multiple historical MDT data are grouped according to the intra-frequency neighbor cell identifier so that historical MDT data carrying the same intra-frequency neighbor cell identifier are divided into one group to obtain the multiple MDT data sets, and then the clustering operation is performed on the MDT data of the same intra-frequency neighbor cell identifier in each MDT data set so that the MDT data in each MDT data set are clustered into multiple data blocks to obtain the multiple candidate MDT data sets.

In an embodiment, when the volume of the multiple historical MDT data is greater than a volume threshold, a part of the historical MDT data are selected from the multiple historical MDT data according to a preset ratio as sample data, and the multiple sample data are grouped according to the intra-frequency neighbor cell identifier in each sample datum to obtain the multiple MDT data sets. The preset ratio may be set according to the actual situation, and for example, the preset ratio is determined according to the volume of the multiple historical MDT data. By screening the multiple historical MDT data, the amount of data to be processed by the network management device can be greatly reduced, and generation and clustering speeds of MDT data sets can be accelerated.

In an embodiment, the intra-frequency neighbor cell identifier includes a first intra-frequency neighbor cell identifier and a second intra-frequency neighbor cell identifier. For example, the first intra-frequency neighbor cell identifier is an identifier of the strongest intra-frequency neighbor cell of the serving cell, and the second intra-frequency neighbor cell identifier is an identifier of the second strongest intra-frequency neighbor cell of the serving cell. The multiple historical MDT data are grouped according to the first intra-frequency neighbor cell identifier and the second intra-frequency neighbor cell identifier in each historical MDT data to obtain the multiple MDT data sets, and a clustering operation is performed on the MDT data in each MDT data set so that the consistency of MDT data in each clustered candidate MDT data set can become stronger, thereby facilitating the subsequent reselection of the target cell.

For example, an example of the structure of each candidate MDT data set is shown in Table 1.

Table 1

| Cluster label (cluster label formed by clustering) |
| --- |
| Number of MDTs included in the candidate MDT data set |
| Serving cell identifier |
| Strongest intra-frequency neighbor cell identifier |
| Second strongest intra-frequency neighbor cell identifier |
| Mean values, maximum values and minimum values of reference signal receiving power (RSRP) of all serving cells in the candidate MDT data set |
| Mean value, maximum value and minimum value of the RSRP of the strongest intra-frequency neighbor cell in the candidate MDT data set |
| Mean value, maximum value and minimum value of the RSRP of the second strongest intra-frequency neighbor cell in the candidate MDT data set |

(continued)

| Inter-frequency neighbor cell information (including the number of inter-frequency neighbor cells, inter-frequency neighbor cell identifiers, an RSRP mean value, an RSRP reporting times, good RSRP reporting times and inter-frequency neighbor cell handover information) |
|---|

In an embodiment, the step in which the clustering operation is performed on the MDT data in each MDT data set to obtain the multiple candidate MDT data sets includes the following: a triple of the MDT data in each MDT data set is acquired, where the triple is composed of an RSRP value of the serving cell, an RSRP value of a first intra-frequency neighbor cell and an RSRP value of a second intra-frequency neighbor cell in the MDT data; a clustering operation is performed on the triple in each MDT data set to obtain multiple triple sets; MDT data corresponding to each triple set is determined to obtain multiple clustered MDT data sets; and MDT data in each clustered MDT data set are aggregated to obtain the multiple candidate MDT data sets.

For example, the clustering operation is performed on the triples of N MDT data sets according to a preset number K of cluster centers so that each MDT data set generates K triple sets to obtain N*K triple sets. MDT data corresponding to each triple set are determined to obtain N*K clustered MDT data sets, and MDT data in each clustered MDT data set are aggregated to obtain N*K candidate MDT data sets. Each MDT data set corresponds to K candidate MDT data. For example, when the preset number K of cluster centers is 10, 10 triple sets are generated in each MDT data set, and each MDT data set corresponds to 10 candidate MDT data. The example of 10 candidate MDT data sets aggregated by one MDT data set is shown in Table 2.

Table 2

| Serving cell identifier: cell 1, Frequency point: F0 | | | | | | | | | | |
|---|---|---|---|---|---|---|---|---|---|---|
| Cluster label | 0 | 1 | 2 | 3 | 4 | 5 | 6 | 7 | 8 | 9 |
| RSRP mean value of the serving cell | -88.7 | -90.0 | -91.0 | -84 | -94.2 | -93 | -92 | -86.6 | -81.2 | -78.3 |
| RSRP maximum value of the serving cell | -88 | -90 | -91 | -83 | -94 | -93 | -92 | -86 | -80 | -74 |
| RSRP minimum value of the serving cell | -89 | -90 | -91 | -85 | -96 | -93 | -92 | -87 | -82 | -79 |
| Strongest intra-frequency neighbor cell identifier | R1 | R1 | R1 | R1 | R1 | R1 | R1 | R1 | R1 | R1 |
| RSRP mean value of the strongest intra-frequency neighbor cell | -140 | -140 | -140 | -140 | -140 | -140 | -140 | -140 | -140 | -140 |
| RSRP maximum value of the strongest intra-frequency neighbor cell | -140 | -140 | -140 | -140 | -140 | -140 | -140 | -140 | -140 | -140 |
| RSRP minimum value of the strongest intra-frequency neighbor cell | -140 | -140 | -140 | -140 | -140 | -140 | -140 | -140 | -140 | -140 |
| Second strongest intra-frequency neighbor cell identifier | R2 | R2 | R2 | R2 | R2 | R2 | R2 | R2 | R2 | R2 |
| RSRP mean value of the second strongest intra-frequency neighbor cell | -140 | -140 | -140 | -140 | -140 | -140 | -140 | -140 | -140 | -140 |
| RSRP maximum value of the second strongest intra-frequency neighbor cell | -140 | -140 | -140 | -140 | -140 | -140 | -140 | -140 | -140 | -140 |
| RSRP minimum value of the second strongest intra-frequency neighbor cell | -140 | -140 | -140 | -140 | -140 | -140 | -140 | -140 | -140 | -140 |

In sub-step S 1022, secondary clustering is performed on the multiple candidate MDT data sets to obtain the multiple target MDT data sets.

Since the number of multiple candidate MDT data sets obtained by the primary clustering is large, the secondary clustering requires to be performed on the multiple candidate MDT data sets to reduce the number of the multiple candidate MDT data sets so that the multiple target MDT data sets generated by the secondary clustering can be better divided.

In an embodiment, a queue of the multiple candidate MDT data sets is established, and one candidate MDT data set is successively selected from the queue as a first MDT data set to be combined; it is determined whether a second MDT data set that can be combined with the first MDT data set exists in the queue; in response to determining that the second MDT data set exists in the queue, the first MDT data set is combined with the second MDT data set to obtain a new first MDT data set; it is determined whether a second MDT data set that can be combined with the new first MDT data set exists in the queue; in response to determining that the second MDT data set that can be combined with the new first MDT data set does not exist in the queue, the queue is updated according to the new first MDT data set; and the step of selecting one candidate MDT data set from the queue as the first MDT data set to be combined is executed until no combinable candidate MDT data set exists in the multiple candidate MDT data sets in the queue to obtain the multiple target MDT data sets.

The step in which it is determined whether the second MDT data set that can be combined with the first MDT data set exists in the queue includes the following: a Euclidean distance between each candidate MDT data set in the queue and the first MDT data set is calculated; a candidate MDT data set corresponding to the nearest Euclidean distance is taken as the nearest MDT data set; the mean value of a good RSRP reporting times ratio in the first MDT data set and a good RSRP reporting times ratio in the nearest MDT data set is determined, and if the mean value of the good RSRP reporting times ratio in the first MDT data set and the good RSRP reporting times ratio in the nearest MDT data set is greater than or equal to a set mean threshold, it is determined the nearest MDT data set is the second MDT data set that can be combined with the first MDT data set; and if the mean value of the good RSRP reporting times ratio in the first MDT data set and the good RSRP reporting times ratio in the nearest MDT data set is less than the set mean threshold, it is determined that no second MDT data set that can be combined with the first MDT data set exits in the queue.

A good RSRP is a reported RSRP value of an inter-frequency neighbor cell and has a value greater than or equal to a threshold, and the good RSRP reporting times ratio is a ratio of good RSRP reporting times of an inter-frequency neighbor cell to the total reporting times. Further, the Euclidean distance between each candidate MDT data set in the queue and the first MDT data set may be calculated by a triple, and the triple includes an RSRP value of the serving cell, an RSRP value of a first intra-frequency neighbor cell and an RSRP value of a second intra-frequency neighbor cell.

For example, after the first MDT data set is selected, the queue further includes i candidate MDT data sets, the triple is a vector, that is, $\mu$ = (RSRP mean value of the serving cell, RSRP mean value of the strongest intra-frequency neighbor cell, and RSRP mean value of the second strongest intra-frequency neighbor cell), and a triple of the first MDT

$$dist(\mu_0, \mu_i) = \|\mu_0 - \mu_i\|_2 = \sqrt{\sum_{j=1}^{3} |\mu_{0j} - \mu_{ij}|^2}$$

data set is vector $\mu_0$. In this manner, the Euclidean distance is that

$$clusterLabel \Leftarrow \underset{i=\{1,2,...,n\}}{argmin} \ d_i$$

, and the nearest MDT data set is that , where $d_i = dist(\mu, \mu_i)$.

In an embodiment, the step in which the queue is updated according to the new first MDT data set includes the following: the new first MDT data set is added to the queue, and the combined second MDT data set is removed from the queue to obtain the updated queue. As described in the preceding embodiment, after the updated queue is obtained, in response to determining that the second MDT data set that can be combined with the new first MDT data set exists in the queue, the new first MDT data set is combined with the second MDT data set to obtain another new first MDT data set until no combinable second MDT data set exists in the queue, and each data set in the queue is outputted to obtain the multiple target MDT data sets. An index label of the candidate MDT data set before combination exists in each target MDT data set, and a combination relationship between each candidate MDT data set before combination and the target MDT data set may be searched for through the index label.

For example, an example of the target MDT data sets obtained after the secondary clustering is performed on one group of candidate MDT data sets is shown in Table 3.

Table 3

| Cluster label | 0 | | 1 | | 2 | | 3 | |
|---|---|---|---|---|---|---|---|---|
| Cluster label including candidate MDT data sets | 0, 1, 2, 5, 6, 7 | | 3, 8 | | 4 | | 9 | |
| Volume of MDT data | 1217630 | | 215613 | | 122312 | | 31579 | |
| Number of inter-frequency neighbor cells | 2 | | 2 | | 2 | | 2 | |
| Inter-frequency neighbor cell identifier | RA | RB | RC | RD | RF | RG | RH | RI |
| Frequency point | F1 | F2 | F3 | F4 | F5 | F6 | F7 | F8 |
| RSRP mean value of the inter-frequency neighbor cell | -98.1 | -92.3 | -89.56 | -98.7 | -101.1 | -96.2 | -88.7 | -80.1 |
| Good RSRP reporting ratio of the inter-frequency neighbor cell | 100 | 99 | 100 | 100 | 100 | 100 | 90 | 89 |
| Number of failed handover preparation times | 0 | 0 | 0 | 0 | 0 | 0 | 0 | 0 |
| Number of successful handover times | 6940 | 30632 | 0 | 0 | 480 | 1050 | 0 | 0 |
| Handover success rate | 100% | 100% | 0 | 0 | 100% | 100% | 0 | 0 |

In step S103, a serving cell of the target user equipment is reselected according to the multiple target MDT data sets.

The target MDT data set includes inter-frequency neighbor cell information including, for example, the number of inter-frequency neighbor cells, inter-frequency neighbor cell identifiers, an RSRP mean value of inter-frequency neighbor cells, inter-frequency neighbor cell handover information and the like. The network management device may select multiple candidate cells of the target user equipment according to the inter-frequency neighbor cell information in the multiple target MDT data sets and selects one candidate cell from the multiple candidate cells as the serving cell of the target user equipment to achieve better communication between the selected candidate cell and the target user equipment.

After the serving cell of the target user equipment is reselected, the current base station of the target user equipment may control the target user equipment to be handed over from the current cell to the reselected serving cell so as to achieve load balancing of cells and ensure the communication quality of the target user equipment.

In an embodiment, the network management device acquires the current MDT data of the target user equipment and reselects the serving cell of the target user equipment based on the multiple target MDT data sets and the current MDT data. For example, the network management device receives the current MDT data sent from the base station and reported by the target user equipment, and according to an intra-frequency neighbor cell identifier carried in the current MDT data, the network management device determines a target MDT data set matching the intra-frequency neighbor cell identifier from the multiple target MDT data sets; the network management device acquires an inter-frequency neighbor cell identifier in the target MDT data set matching the intra-frequency neighbor cell identifier to obtain an inter-frequency neighbor cell list; and the network management device generates a target cell list of the target user equipment through the inter-frequency neighbor cell list and randomly reselects the serving cell of the target user equipment from the target cell list.

In an embodiment, the network management device sends the multiple target MDT data sets to the base station for the base station to reselect the serving cell of the target user equipment based on the multiple target MDT data sets and current MDT data reported by the target user equipment. For example, after receiving the multiple target MDT data sets sent by the network management device, the base station acquires the current MDT data reported by the target user equipment; according to an intra-frequency neighbor cell identifier carried in the current MDT data, the base station determines, from the multiple target MDT data sets, a target MDT data set matching the intra-frequency neighbor cell identifier; the base station acquires an inter-frequency neighbor cell identifier in the target MDT data set matching the intra-frequency neighbor cell identifier to obtain an inter-frequency neighbor cell list; and the base station generates a target cell list of the target user equipment through the inter-frequency neighbor cell list and randomly reselects a target cell with a relatively low load from the target cell list as the serving cell of the target user equipment.

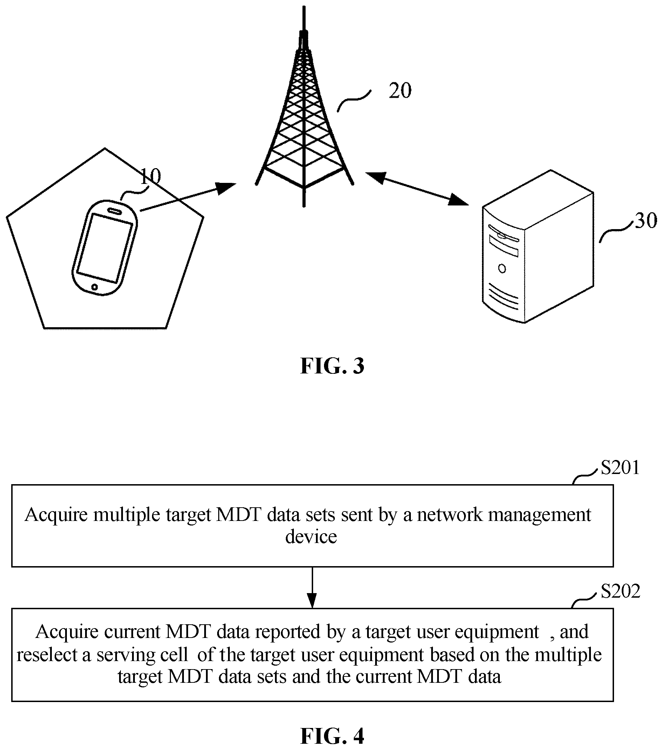

With reference to FIG. 3, FIG. 3 is a schematic diagram of a scenario of a cell reselection method according to an embodiment of the present application. As shown in FIG. 3, when the base station 20 determines that cell reselection requires to be performed on the target user equipment 10, the base station 20 sends a cell reselection request of the target user equipment 10 to the network management device 30. The network management device 30 collects MDT data of multiple user equipments of the serving cell in which the target user equipment 10 is located based on the received cell reselection request sent by the base station 20 to obtain multiple historical MDT data of the serving cell in which the target user equipment 10 is located. The network management device 30 performs clustering processing on the multiple historical MDT data to obtain multiple target MDT data sets and sends the multiple target MDT data sets to the base station 20. The base station 20 reselects a serving cell of the target user equipment 10 based on the received multiple target MDT data sets.

In the cell reselection method provided by the preceding embodiments, multiple historical MDT data of the serving cell in which the target user equipment is located are acquired, clustering processing is performed on the multiple historical MDT data to obtain multiple target MDT data sets, and then a serving cell of the target user equipment is reselected according to the multiple target MDT data sets, thereby greatly improving the effectiveness of the reselected serving cell, avoiding invalid selection and handover of the serving cell of the user equipment, ensuring the network coverage effect of the reselected serving cell and improving the user experience.

With reference to FIG. 4, FIG. 4 is a flowchart of another cell reselection method according to an embodiment of the present application. The cell reselection method can be applied to a base station.

As shown in FIG. 4, the cell reselection method includes steps S201 and S202.

In step S201, multiple target MDT data sets sent by a network management device are acquired.

The multiple target MDT data sets are obtained by the network management device performing clustering on multiple historical MDT data of a serving cell in which a target user equipment is located.

For example, the network management device sends target MDT data sets of multiple cells of the base station to the base station at a preset time interval so that the base station acquires the target MDT data set of the serving cell in which the target user equipment is located from the target MDT data sets of the multiple cells sent by the network management device. Alternatively, the network management device sends the target MDT data set of the serving cell in which the target user equipment is located to the base station based on a cell reselection request of the target user equipment which is sent by the base station to the network management device. The embodiments of the present application are not limited thereto.

For the specific implementation in which the network management device clusters multiple historical MDT data of the serving cell in which the target user equipment is located, reference may be made to other embodiments of the present application, and the details are not repeated here.

In step S202, current MDT data reported by the target user equipment are acquired, and a serving cell of the target user equipment is reselected based on the multiple target MDT data sets and the current MDT data.

For example, after receiving the multiple target MDT data sets sent by the network management device, the base station acquires the current MDT data reported by the target user equipment and determines a target MDT data set matching the current MDT data from the multiple target MDT data sets according to the multiple target MDT data sets and an intra-frequency neighbor cell identifier carried in the current MDT data; the base station acquires at least one inter-frequency neighbor cell identifier in the target MDT data set matching the current MDT data to obtain an inter-frequency neighbor cell list; and the base station generates a target cell list of the target user equipment through the inter-frequency neighbor cell list and randomly reselects a target cell of the highest handover success rate from the target cell list as the serving cell of the target user equipment.

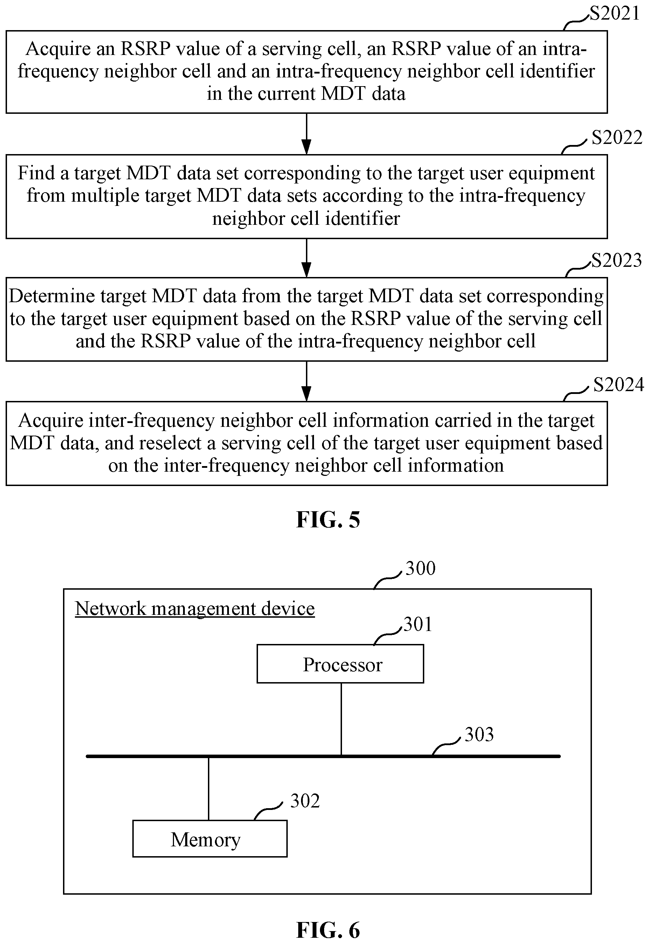

In an embodiment, as shown in FIG. 5, the step in which the serving cell of the target user equipment is reselected based on the multiple target MDT data sets and the current MDT data includes sub-steps S2021 to S2024.

In sub-step S2021, an RSRP value of the serving cell, an RSRP value of an intra-frequency neighbor cell and an intra-frequency neighbor cell identifier in the current MDT data are acquired.

The intra-frequency neighbor cell includes a first intra-frequency neighbor cell and/or a second intra-frequency neighbor cell, the intra-frequency neighbor cell identifier includes a first intra-frequency neighbor cell identifier and/or a second intra-frequency neighbor cell identifier, the first intra-frequency neighbor cell may be an intra-frequency neighbor cell with the strongest received power value of the serving cell, and the second intra-frequency neighbor cell may be an intra-frequency neighbor cell with the second strongest received power value of the serving cell.

In sub-step S2022, a target MDT data set corresponding to the target user equipment is found in the multiple target MDT data sets according to the intra-frequency neighbor cell identifier.

The multiple target MDT data sets are obtained by the network management device performing the clustering processing on the multiple historical MDT data of the serving cell in which the target user equipment is located. When the clustering processing is performed on the multiple historical MDT data, the multiple historical MDT data require to be classified according to the intra-frequency neighbor cell identifiers of the serving cell in the historical MDT data. Based on this, the target MDT data set corresponding to the target user equipment may be found in the multiple target MDT data sets according to the intra-frequency neighbor cell identifier in the current MDT data, and the found target MDT data set corresponding to the target user equipment carries the same intra-frequency neighbor cell identifier.

In an embodiment, the multiple target MDT data sets are obtained by the network management device performing the secondary clustering on the multiple candidate MDT data sets, and each target MDT data set includes at least one candidate MDT data set. The multiple candidate MDT data sets are obtained by the network management device performing the primary clustering on the multiple historical MDT data of the serving cell in which the target user equipment is located, and each candidate MDT data set includes at least one historical MDT datum. When the primary clustering is performed on the multiple historical MDT data, the multiple historical MDT data require to be classified according to the intra-frequency neighbor cell identifiers of the serving cell in the historical MDT data. Therefore, the candidate MDT data sets carrying the same intra-frequency neighbor cell identifier may be found through the intra-frequency neighbor cell identifier in the current MDT data, and the target MDT data sets corresponding to the found candidate MDT data sets may be determined according to the index label between the found candidate MDT data sets and the target MDT data sets to determine the target MDT data set corresponding to the target user equipment.

For example, the intra-frequency neighbor cell identifier in the current MDT data includes a first intra-frequency neighbor cell identifier R1 and a second intra-frequency neighbor cell identifier R2. The candidate MDT data sets shown in Table 2 may be found according to the first intra-frequency neighbor cell identifier R1 and the second intra-frequency neighbor cell identifier R2, and then the target MDT data sets shown in Table 3 may be determined according to the index label between the found candidate MDT data sets and the target MDT data sets. An example of index labels of the candidate MDT data sets and the target MDT data sets is shown in Table 4.

Table 4

| Index label mapping table | | | | | | | |
|---|---|---|---|---|---|---|---|
| Candidate MDT data set | | | | | | | Target MDT data set |
| Serving cell identifier | RSRP of the Serving cell | Strongest intra-frequenc y neighbor cell identifier | RSRP of the strongest intra-frequency neighbor cell | Second strongest intra-frequency neighbor cell identifier | RSRP of the second strongest intra-frequency neighbor cell | Cluster label | Cluster label |
| 1 | 1-N | 1-C1 | 1-N1 | 1-C2 | 1-N2 | A1 | B1 |
| 2 | 2-N | 2-C1 | 2-N1 | 2-C2 | 2-N2 | A2 | B2 |
| 3 | 3-N | 3-C1 | 3-N1 | 3-C2 | 3-N2 | A3 | B2 |
| ... | ... | ... | ... | ... | ... | ... | ... |

In sub-step S2023, target MDT data are determined from the target MDT data set corresponding to the target user equipment based on the RSRP value of the serving cell and the RSRP value of the intra-frequency neighbor cell.

When the clustering processing is performed on the multiple historical MDT data, a clustering operation is performed on the multiple historical MDT data according to the RSRP value of the serving cell and the RSRP value of the intra-frequency neighbor cell in historical MDT data. For example, the clustering operation is performed on the multiple historical MDT data according to the RSRP value of the serving cell, the RSRP value of the first intra-frequency neighbor cell and the RSRP value of the second intra-frequency neighbor cell that constitute a triple so that triples whose Euclidean distances are relatively small are aggregated and triples whose Euclidean distances are relatively large are far away. Each group of mutually aggregated triples form one triple set, and MDT data corresponding to each triple in the triple set are replaced to obtain the multiple target MDT data sets.

A Euclidean distance between each MDT datum in the target MDT data set corresponding to the target user equipment and the current MDT data is determined based on the RSRP value of the serving cell and the RSRP value of the intra-frequency neighbor cell, and an MDT datum corresponding to the smallest Euclidean distance in the target MDT data set is taken as the target MDT data.

The formula of the preceding Euclidean distance has been described in other embodiments of the present application, and the details are not repeated here. The target MDT data corresponding to the smallest Euclidean distance are MDT data in which the RSRP value of the serving cell of the target user equipment and the RSRP value of the intra-frequency neighbor cell are the same or similar, and the reselection effect of the serving cell of the target user equipment according to the inter-frequency neighbor cell information in the target MDT data becomes better.

In an embodiment, a Euclidean distance between each MDT datum in the candidate MDT data set corresponding to the target user equipment and the current MDT data is determined based on the RSRP value of the serving cell and the RSRP value of the intra-frequency neighbor cell; an MDT datum corresponding to the smallest Euclidean distance in the candidate MDT data set is taken as candidate MDT data; and the target MDT data corresponding to the candidate MDT data are determined according to the index labels of MDT data in the candidate MDT data set and each MDT data in the target MDT data set.

For example, the base station receives a current MDT datum reported by the target user equipment, where the RSRP of the serving cell, the RSRP value of the strongest intra-frequency neighbor cell and the RSRP value of the second strongest intra-frequency neighbor cell are -89. 2, -140 and -140, respectively, and a ternary vector set of (-89.2, -140, -140) is formed. The candidate MDT data sets corresponding to the current MDT datum are shown in Table 2. As shown in Table 5, a Euclidean distance between the current MDT datum and MDT data of each cluster label is calculated through the ternary vector according to Table 2, and the cluster label corresponding to the minimum Euclidean distance is "0". According to Table 3, it can be seen that the cluster label of the target MDT data set is indexed to "0" according to the cluster label "0" of the candidate MDT data set, that is, the MDT data in the target MDT data set with the cluster label of "0" is determined as the target MDT data.

Table 5

| Cluster label | 0 | 1 | 2 | 3 | 4 | 5 | 6 | 7 | 8 | 9 |
|---|---|---|---|---|---|---|---|---|---|---|
| Euclidean distance between the UE and the grid | 0.5 | 0.8 | 1.8 | 5.2 | 5 | 3.8 | 2.8 | 2.6 | 8 | 10.9 |

In sub-step S2024, inter-frequency neighbor cell information carried in the target MDT data is acquired, and the serving cell of the target user equipment is reselected based on the inter-frequency neighbor cell information.

The inter-frequency neighbor cell information includes the number of inter-frequency neighbor cells, inter-frequency neighbor cell identifiers, an RSRP mean value of inter-frequency neighbor cells, inter-frequency neighbor cell handover information and the like. When cell handover is performed, the user equipment usually hands over to an inter-frequency neighbor cell of the current serving cell.

In an embodiment, the step in which the serving cell of the target user equipment is reselected based on the inter-frequency neighbor cell information includes the followings: multiple inter-frequency neighbor cell identifiers in the inter-frequency neighbor cell information are acquired, and an inter-frequency neighbor cell list is generated according to the multiple inter-frequency neighbor cell identifiers; multiple inter-frequency neighbor cells in the inter-frequency neighbor cell list are screened based on a preset condition to obtain a candidate cell list; and one candidate cell is selected from the candidate cell list as the target cell of the target user equipment. In an embodiment, the preset condition includes at least one of the following: an inter-frequency neighbor cell is in a cell list of the current base station of the target user equipment; an RSRP mean value of an inter-frequency neighbor cell is greater than or equal to a set mean threshold; a good RSRP reporting ratio of an inter-frequency neighbor cell is greater than or equal to a set reporting ratio threshold; or a handover success rate of an inter-frequency neighbor cell is greater than or equal to a set percentage threshold.

The selection method for selecting one candidate cell from the candidate cell list includes at least one of the following: one candidate cell is randomly selected; a candidate cell corresponding to the largest good RSRP reporting ratio is selected; a candidate cell corresponding to the largest good RSRP mean value is selected; a candidate cell corresponding to the highest number of successful handover times is selected; a candidate cell corresponding to the highest handover success rate is selected; or a candidate cell with the smallest load is selected.

For example, as shown in Table 3, the target MDT data are the MDT data in the target MDT data set with the cluster label of "0". Two inter-frequency neighbor cells are reported in the target MDT data, that is, RA and RB, and the handover success rates of RA and RB are both 100%. RA and RB constitute a candidate cell list, the number of successful handover times of RA is 6940, the number of successful handover times of RB is 30632, and the candidate cell RB corresponding to the highest number of successful handover times is selected as the target cell of the target user equipment.

For example, as shown in Table 3, the target MDT data are MDT data in the target MDT data set with the cluster label of "3". Two inter-frequency neighbor cells are reported in the target MDT data, that is, RH and RI. Assuming that the inter-frequency neighbor cell mean threshold set for screening candidate cells is -80, the good RSRP reporting ratio threshold is 95% and the handover success rate threshold is 90%, RH and RI are not in the cell list of the current base station. The target user equipment does not meet any one of the screening conditions, so the candidate cell list of the target user equipment is empty. Therefore, the base station may not perform cell handover on the target user equipment or uses the load balancing method to perform cell handover.

In the cell reselection method provided by the preceding embodiments, the base station acquires multiple target MDT data sets sent by the network management device, where the multiple target MDT data sets are obtained by the network management device performing clustering on multiple historical MDT data of the serving cell in which the target user equipment is located, and then the base station acquires the current MDT data reported by the target user equipment and reselects a serving cell of the target user equipment based on the multiple target MDT data sets and the current MDT data, thereby greatly improving the effectiveness of the reselected serving cell, avoiding the invalid selection and handover of the serving cell of the user equipment, ensuring the network coverage effect of the reselected serving cell and improving the user experience.

With reference to FIG. 6, FIG. 6 is a structure diagram of a network management device according to an embodiment of the present application.

As shown in FIG. 6, the network management device 300 includes a processor 301 and a memory 302. The processor 301 and the memory 302 are connected to each other via a bus 303, and the bus is, for example, an inter-integrated circuit (I2C) bus.

The processor 301 is configured to provide calculation and control capabilities to support operations of the entire network management device. The processor 301 may be a central processing unit (CPU), and the processor 301 may also be a general-purpose processor, a digital signal processor (DSP), an application-specific integrated circuit (ASIC), a field-programmable gate array (FPGA) or other programmable logic devices, discrete gates or transistor logic devices, or discrete hardware components. The general-purpose processor may be a microprocessor or any conventional processor.

The memory 302 may be a flash chip, a read-only memory (ROM), a magnetic disk, an optical disk, a USB flash drive or a mobile hard disk drive.

The structure shown in FIG. 6 is a block diagram of part of the structure associated with the embodiments of the present application and is not intended to limit the network management device on which the embodiments of the present application are applied. The server may include more or fewer components than the components illustrated, may include a combination of some of the components illustrated or may include components arranged in a different manner than the components illustrated.

The processor 301 is configured to run the computer program stored in the memory and to implement any of the cell reselection methods provided by the embodiments of the present application when executing the computer program.

In an embodiment, the processor 301 is configured to run the computer program stored in the memory and perform the steps described below when executing the computer program.

Multiple historical MDT data of a serving cell in which a target user equipment is located are acquired; clustering processing is performed on the multiple historical MDT data to obtain multiple target MDT data sets; and a serving cell of the target user equipment is reselected according to the multiple target MDT data sets.

In an embodiment, when performing clustering processing on the multiple historical MDT data to obtain multiple target MDT data sets, the processor 301 is configured to implement the following:
primary clustering is performed on the multiple historical MDT data to obtain multiple candidate MDT data sets, and secondary clustering is performed on the multiple candidate MDT data sets to obtain the multiple target MDT data sets.

In an embodiment, when performing primary clustering on the multiple historical MDT data to obtain multiple candidate MDT data sets, the processor 301 is configured to implement the following:
the multiple historical MDT data are grouped according to an intra-frequency neighbor cell identifier in each historical MDT datum to obtain multiple MDT data sets, and a clustering operation is performed on MDT data in each MDT data set to obtain the multiple candidate MDT data sets.

In an embodiment, when performing a clustering operation on MDT data in each MDT data set to obtain the multiple candidate MDT data sets, the processor 301 is configured to implement the following:
a triple of the MDT data in each MDT data set is acquired, where the triple is composed of an RSRP value of the serving cell, an RSRP value of a first intra-frequency neighbor cell and an RSRP value of a second intra-frequency neighbor cell in the MDT data; a clustering operation is performed on the triple in each MDT data set to obtain multiple triple sets; MDT data corresponding to each triple set are determined to obtain multiple clustered MDT data sets; and MDT data in each clustered MDT data set are aggregated to obtain the multiple candidate MDT data sets.

In an embodiment, when performing secondary clustering on the multiple candidate MDT data sets to obtain the multiple target MDT data sets, the processor 301 is configured to implement the following:
a queue of the multiple candidate MDT data sets is established, and one candidate MDT data set is successively selected from the queue as a first MDT data set to be combined; whether a second MDT data set that can be combined with the first MDT data set exists in the queue is determined; in response to determining that the second MDT data set exists in the queue, the first MDT data set is combined with the second MDT data set to obtain a new first MDT data set; whether a second MDT data set that can be combined with the new first MDT data set exists in the queue is determined; in response to determining that the second MDT data set that can be combined with the new first MDT data set does not exist in the queue, the queue is updated according to the new first MDT data set; and the step of selecting one candidate MDT data set from the queue as the first MDT data set to be combined is executed until no combinable candidate MDT data set exists in the multiple candidate MDT data sets in the queue to obtain the multiple target MDT data sets.

In an embodiment, when reselecting a serving cell of the target user equipment according to the multiple target MDT data sets, the processor 301 is configured to implement the following:

current MDT data of the target user equipment is acquired, and the serving cell of the target user equipment is reselected based on the multiple target MDT data sets and the current MDT data; or the multiple target MDT data sets are sent to a base station for the base station to reselect the serving cell of the target user equipment based on the multiple target MDT data sets and current MDT data reported by the target user equipment.

For the convenience and brevity of the description, the working process of the above-described network management device, reference may be made to the corresponding process in the preceding method embodiments of the cell reselection method and the details are not repeated here.

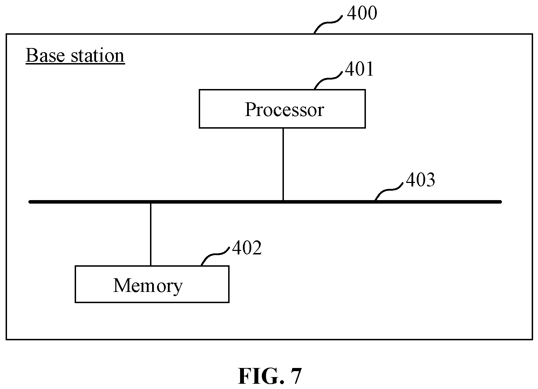

With reference to FIG. 7, FIG. 7 is a structure diagram of a base station according to an embodiment of the present application.

As shown in FIG. 7, the base station 400 includes a processor 401 and a memory 402. The processor 401 and the memory 402 are connected via a bus 403, and the bus is, for example, an I2C bus.

The processor 401 is configured to provide calculation and control capabilities to support the operation of the entire base station. The processor 401 may be a CPU, and the processor 401 may also be a general-purpose processor, a DSP, an ASIC, an FPGA or other programmable logic devices, discrete gates or transistor logic devices, or discrete hardware components. The general-purpose processor may be a microprocessor or any conventional processor.

The memory 402 may be a flash chip, a ROM, a magnetic disk, an optical disk, a USB flash drive or a mobile hard disk drive.

The structure shown in FIG. 7 is a block diagram of part of the structure associated with the embodiments of the present application and is not intended to limit the base station on which the embodiments of the present application are applied. The server may include more or fewer components than the components illustrated, may include a combination of some of the components illustrated or may include components arranged in a different manner than the components illustrated.

The processor 401 is configured to run the computer program stored in the memory and to implement any of the cell reselection methods provided by the embodiments of the present application when executing the computer program.

In an embodiment, the processor 401 is configured to run the computer program stored in the memory and when executing the computer program, perform the steps described below.

Multiple target MDT data sets sent by a network management device are acquired, where the multiple target MDT data sets are obtained by the network management device performing clustering on multiple historical MDT data of a serving cell in which a target user equipment is located; and current MDT data reported by the target user equipment are acquired, and a serving cell of the target user equipment is reselected based on the multiple target MDT data sets and the current MDT data.

In an embodiment, when reselecting a serving cell of the target user equipment according to the multiple target MDT data sets, the processor 401 is configured to implement the following:

an RSRP value of the serving cell, an RSRP value of an intra-frequency neighbor cell and an intra-frequency neighbor cell identifier are acquired in the current MDT data; a target MDT data set corresponding to the target user equipment is found in the multiple target MDT data sets according to the intra-frequency neighbor cell identifier; target MDT data are determined from the target MDT data set corresponding to the target user equipment based on the RSRP value of the serving cell and the RSRP value of the intra-frequency neighbor cell; and inter-frequency neighbor cell information carried in the target MDT data is acquired, and the serving cell of the target user equipment is reselected based on the inter-frequency neighbor cell information.

In an embodiment, when determining target MDT data from the target MDT data set corresponding to the target user equipment based on the RSRP value of the serving cell and the RSRP value of the intra-frequency neighbor cell, the processor 401 is configured to implement the following:

a Euclidean distance between each MDT datum in the target MDT data set corresponding to the target user equipment and the current MDT data is determined based on the RSRP value of the serving cell and the RSRP value of the intra-frequency neighbor cell, and MDT data corresponding to the smallest Euclidean distance in the target MDT data set are taken as the target MDT data.

In an embodiment, when reselecting a serving cell of the target user equipment according to the inter-frequency neighbor cell information, the processor 401 is configured to implement the following:

multiple inter-frequency neighbor cell identifiers in the inter-frequency neighbor cell information are acquired, and an inter-frequency neighbor cell list is generated according to the multiple inter-frequency neighbor cell identifiers; multiple inter-frequency neighbor cells in the inter-frequency neighbor cell list are screened based on a preset condition to obtain a candidate cell list; and one candidate cell is selected from the candidate cell list as a target cell of the target user equipment.

In an embodiment, the processor 401 is configured to implement the following.

The preset condition includes at least one of the following: an inter-frequency neighbor cell is in a cell list of the current base station of the target user equipment; an RSRP mean value of an inter-frequency neighbor cell is greater than or equal to a set mean threshold; a good RSRP reporting ratio of an inter-frequency neighbor cell is greater than or equal to a set reporting ratio threshold; or a handover success rate of an inter-frequency neighbor cell is greater than or equal to a set percentage threshold.

For the convenience and brevity of the description, the working process of the above-described base station, reference may be made to the corresponding process in the preceding method embodiments of the cell reselection method, and the details are not repeated here.

The embodiments of the present application further provide a storage medium. The storage medium is configured for computer-readable storage, where the storage medium stores one or more programs, and the one or more programs are executable by one or more processors to perform the steps of any of the cell reselection methods provided by the embodiments of the present application.

The storage medium may be an internal storage unit of the network management device or the base station described in the preceding embodiments, for example, a hard disk or a memory of the network management device or the base station. The storage medium may also be an external storage device of the network management device or the base station, such as a pluggable hard disk, a smart media card (SMC), a secure digital (SD) card or a flash card provided on the network management device or the base station.

Some or all steps of the preceding method and function modules/units in the preceding system or apparatus may be implemented as software, firmware, hardware, and suitable combinations thereof. In a hardware implementation, the division of the function modules/units may not correspond to the division of physical components. For example, one physical component may have several functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as application-specific integrated circuits. Such software may be distributed on computer-readable media. The computer-readable media may include computer storage media (or non-transitory media and communication media (or transitory media). The term computer storage media include volatile and nonvolatile as well as removable and non-removable media implemented in any method or technology for storage of information (such as computer-readable instructions, data structures, program modules or other data). The computer-storage medium include, but is not limited to, a random-access memory (RAM), a ROM, an electrically erasable programmable read-only memory (EEPROM), a flash memory or other memory technologies, a compact disc read-only memory (CD-ROM), a digital versatile disc (DVD) or other optical storages, a magnetic cassette, a magnetic tape, a magnetic disk or other magnetic storage devices, or any other medium for storing desired information that can be accessed by a computer. The communication media generally include computer-readable instructions, data structures, program modules, or other data in carriers or in modulated data signals transported in other transport mechanisms and may include any information delivery medium.

The term "and/or" as used herein refers to and encompasses any and all possible combinations of one or more of the associated listed items. As used herein, the term "include", "contain" or any other variant thereof is intended to encompass a non-exclusive inclusion so that a process, method, article or system that includes a series of elements not only includes these elements but also includes other elements that are not expressly listed or are inherent to such a process, method, article or system. In the absence of more restrictions, the elements defined by the statement "include a ..." do not exclude the presence of additional identical elements in the process, method, article or system that includes the elements.

**Claims**

1. A cell reselection method, comprising:

   acquiring a plurality of historical minimization drive test, MDT, data of a serving cell in which a target user equipment is located;
   performing clustering processing on the plurality of historical MDT data to obtain a plurality of target MDT data sets; and
   reselecting a serving cell of the target user equipment according to the plurality of target MDT data sets.

2. The method of claim 1, wherein performing the clustering processing on the plurality of historical MDT data to obtain the plurality of target MDT data sets comprises:

   performing primary clustering on the plurality of historical MDT data to obtain a plurality of candidate MDT data sets; and

performing secondary clustering on the plurality of candidate MDT data sets to obtain the plurality of target MDT data sets.

3. The method of claim 2, wherein performing the primary clustering on the plurality of historical MDT data to obtain the plurality of candidate MDT data sets comprises:

grouping the plurality of historical MDT data according to an intra-frequency neighbor cell identifier in each of the plurality of historical MDT data to obtain a plurality of MDT data sets; and
performing a clustering operation on MDT data in each of the plurality of MDT datNa sets to obtain the plurality of candidate MDT data sets.

4. The method of claim 3, wherein performing the clustering operation on the MDT data in each of the plurality of MDT data sets to obtain the plurality of candidate MDT data sets comprises:

acquiring a triple of the MDT data in each of the plurality of MDT data sets, wherein the triple is composed of a reference signal receiving power, RSRP, value of the serving cell in which the target user equipment is located, an RSRP value of a first intra-frequency neighbor cell and an RSRP value of a second intra-frequency neighbor cell in the MDT data;
performing a clustering operation on the triple in each of the plurality of MDT data sets to obtain a plurality of triple sets;
determining MDT data corresponding to each of the plurality of triple sets to obtain a plurality of clustered MDT data sets; and
aggregating MDT data in each of the plurality of clustered MDT data sets to obtain the plurality of candidate MDT data sets.

5. The method of claim 2, wherein performing the secondary clustering on the plurality of candidate MDT data sets to obtain the plurality of target MDT data sets comprises:

establishing a queue of the plurality of candidate MDT data sets, and successively selecting one candidate MDT data set from the queue as a first MDT data set to be combined;
determining whether a second MDT data set combinable with the first MDT data set exists in the queue;
in response to determining that the second MDT data set exists in the queue, combining the first MDT data set with the second MDT data set to obtain a new first MDT data set;
determining whether a second MDT data set combinable with the new first MDT data set exists in the queue;
in response to determining that the second MDT data set combinable with the new first MDT data set does not exist in the queue, updating the queue according to the new first MDT data set; and
executing an operation of selecting one candidate MDT data set from the queue as the first MDT data set to be combined until no combinable candidate MDT data set exists in the plurality of candidate MDT data sets in the queue to obtain the plurality of target MDT data sets.

6. The method of any one of claims 1 to 5, wherein reselecting the serving cell of the target user equipment according to the plurality of target MDT data sets comprises:

acquiring current MDT data of the target user equipment, and reselecting the serving cell of the target user equipment based on the plurality of target MDT data sets and the current MDT data; or
sending the plurality of target MDT data sets to a base station for the base station to reselect the serving cell of the target user equipment based on the plurality of target MDT data sets and current MDT data reported by the target user equipment.

7. A cell reselection method, comprising:

acquiring a plurality of target minimization drive test, MDT, data sets sent by a network management device, wherein the plurality of target MDT data sets are obtained by the network management device performing clustering on a plurality of historical MDT data of a serving cell in which a target user equipment is located; and
acquiring current MDT data reported by the target user equipment, and reselecting a serving cell of the target user equipment based on the plurality of target MDT data sets and the current MDT data.

8. The method of claim 7, wherein reselecting the serving cell of the target user equipment based on the plurality of target MDT data sets and the current MDT data comprises:

acquiring, in the current MDT data, an intra-frequency neighbor cell identifier, a reference signal receiving power, RSRP, value of the serving cell in which the target user equipment is located and an RSRP value of an intra-frequency neighbor cell;

finding, according to the intra-frequency neighbor cell identifier, a target MDT data set corresponding to the target user equipment from the plurality of target MDT data sets;

determining, based on the RSRP value of the serving cell in which the target user equipment is located and the RSRP value of the intra-frequency neighbor cell, target MDT data from the target MDT data set corresponding to the target user equipment; and

acquiring inter-frequency neighbor cell information carried in the target MDT data, and reselecting the serving cell of the target user equipment based on the inter-frequency neighbor cell information.

9. The method of claim 8, wherein determining, based on the RSRP value of the serving cell in which the target user equipment is located and the RSRP value of the intra-frequency neighbor cell, the target MDT data from the target MDT data set corresponding to the target user equipment comprises:

determining, based on the RSRP value of the serving cell in which the target user equipment is located and the RSRP value of the intra-frequency neighbor cell, a Euclidean distance between the current MDT data and each MDT datum in the target MDT data set corresponding to the target user equipment; and

taking MDT data corresponding to a smallest Euclidean distance in the target MDT data set as the target MDT data.

10. The method of claim 8, wherein reselecting the serving cell of the target user equipment based on the inter-frequency neighbor cell information comprises:

acquiring a plurality of inter-frequency neighbor cell identifiers in the inter-frequency neighbor cell information, and generating an inter-frequency neighbor cell list according to the plurality of inter-frequency neighbor cell identifiers;

screening, based on a preset condition, a plurality of inter-frequency neighbor cells in the inter-frequency neighbor cell list to obtain a candidate cell list; and

selecting one candidate cell from the candidate cell list as the target cell of the target user equipment.

11. The method of claim 10, wherein the preset condition comprises at least one of the following:

an inter-frequency neighbor cell in a cell list of a current base station of the target user equipment; an RSRP mean value of an inter-frequency neighbor cell greater than or equal to a set mean threshold; a good RSRP reporting ratio of an inter-frequency neighbor cell greater than or equal to a set reporting ratio threshold; or a handover success rate of an inter-frequency neighbor cell greater than or equal to a set percentage threshold; wherein a good RSRP is a reported RSRP of an inter-frequency neighbor cell and has a value greater than or equal to a threshold.

12. A network management device, comprising a processor, a memory, a computer program stored in the memory and executable by the processor, and a data bus configured to enable connection communication between the processor and the memory, wherein the computer program, when executed by the processor, performs the cell reselection method of any one of claims 1 to 6.

13. A base station, comprising a processor, a memory, a computer program stored in the memory and executable by the processor, and a data bus configured to enable connection communication between the processor and the memory, wherein the computer program, when executed by the processor, performs the cell reselection method of any one of claims 7 to 11.

14. A storage medium configured for computer-readable storage, wherein the storage medium stores at least one program, and the at least one program is executable by at least one processor to perform the cell reselection method of any one of claims 1 to 6 or to perform the cell reselection method of any one of claims 7 to 11.

S101

Acquire multiple historical MDT data of a serving cell in which a target user equipment is located

S102

Perform clustering processing on the multiple historical MDT data to obtain multiple target MDT data sets

S103

Reselect a serving cell of the target user equipment according to the multiple target MDT data sets

**FIG. 1**

S1021

Perform primary clustering on the multiple historical MDT data to obtain multiple candidate MDT data sets

S1022

Perform secondary clustering on the multiple candidate MDT data sets to obtain the multiple target MDT data sets

**FIG. 2**

FIG. 3

S201

Acquire multiple target MDT data sets sent by a network management device

S202

Acquire current MDT data reported by a target user equipment , and reselect a serving cell of the target user equipment based on the multiple target MDT data sets and the current MDT data

FIG. 4

_S2021

Acquire an RSRP value of a serving cell, an RSRP value of an intra-frequency neighbor cell and an intra-frequency neighbor cell identifier in the current MDT data

_S2022

Find a target MDT data set corresponding to the target user equipment from multiple target MDT data sets according to the intra-frequency neighbor cell identifier

_S2023

Determine target MDT data from the target MDT data set corresponding to the target user equipment based on the RSRP value of the serving cell and the RSRP value of the intra-frequency neighbor cell

_S2024

Acquire inter-frequency neighbor cell information carried in the target MDT data, and reselect a serving cell of the target user equipment based on the inter-frequency neighbor cell information

**FIG. 5**

_300

Network management device

_301

Processor

_303

_302

Memory

**FIG. 6**

400

Base station

401

Processor

403

402

Memory

**FIG. 7**

## INTERNATIONAL SEARCH REPORT

| International application No. |
| --- |
| **PCT/CN2021/082398** |

| A. | CLASSIFICATION OF SUBJECT MATTER |
| --- | --- |
| | H04W 36/24(2009.01)i |

According to International Patent Classification (IPC) or to both national classification and IPC

| B. | FIELDS SEARCHED |
| --- | --- |

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; EPTXT; USTXT; WOTXT; 3GPP: 小区, 聚类, 最小化路测, 历史, 在前, 记录, 日志, 选择, 切换, 重选, 调整, 改变, 组, 集, mdt, Minimization, Drive, Test, CELL, elect+, HISTORY, cluster+, group+, switch+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 109996299 A (CHINA MOBILE GROUP HEBEI COMPANY LIMITED et al.) 09 July 2019 (2019-07-09)<br>entire document | 1-14 |
| A | CN 102752787 A (ZTE CORPORATION) 24 October 2012 (2012-10-24)<br>entire document | 1-14 |
| A | EP 3079382 A1 (IPCOM GMBH & CO., KG.) 12 October 2016 (2016-10-12)<br>entire document | 1-14 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 May 2021** | **28 June 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/082398**

| Patent document cited in search report | | | Publication date (day/month/year) | Patent family member(s) | | | Publication date (day/month/year) |
|---|---|---|---|---|---|---|---|
| CN | 109996299 | A | 09 July 2019 | None | | | |
| CN | 102752787 | A | 24 October 2012 | CN | 102752787 | B | 28 September 2016 |
| EP | 3079382 | A1 | 12 October 2016 | EP | 3764666 | A1 | 13 January 2021 |
| | | | | EP | 3079382 | B1 | 17 June 2020 |
| | | | | PL | 3079382 | T3 | 16 November 2020 |

Form PCT/ISA/210 (patent family annex) (January 2015)